# EUROPEAN PATENT APPLICATION

(11) **EP 4 583 215 A1**
(43) Date of publication of application: **09.07.2025**
(21) Application number: 23887713.8
(22) Date of filing: 11.10.2023
(51) Int. Cl.: H01M 10/04, H01M 50/553

(54) **BATTERY AND ELECTRONIC APPARATUS**

(30) Priority: 10.11.2022 CN 202211406648
(71) Applicant: Ningde Amperex Technology Limited, Ningde, Fujian 352100 (CN)
(72) Inventor: CAO, Weiyi, Ningde, Fujian 352100 (CN); LIU, Ning, Ningde, Fujian 352100 (CN); WU, Hua, Ningde, Fujian 352100 (CN); HE, Ping, Ningde, Fujian 352100 (CN)
(74) Representative: Icosa
(86) International application number: PCT/CN2023/124023
(87) International publication number: WO 2024/099021

(57) **Abstract**

This application discloses a battery and an electronic apparatus, where the battery includes a cell, the cell includes a housing, an electrode assembly, a pole, and a bonding member, and the electrode assembly is accommodated in the housing. The housing includes a first surface in a thickness direction of the battery, and the housing is provided with a first avoidance opening running through the first surface along the thickness direction of the battery. The pole is disposed at the first avoidance opening, the bonding member is disposed between the pole and the housing, and the bonding member is configured to bond the pole to the housing. In this way, the pole may be at least partially disposed in the housing, and the pole may be connected to the outside via the first avoidance opening. This helps to reduce the impact of the size of the pole on the thickness of the cell and manufacture the thinner cell, thus increasing the energy density of the battery.

## Description

This application claims priority to Chinese Patent Application No. 202211406648.X, filed with the China National Intellectual Property Administration on November 10, 2022 and entitled "BATTERY AND ELECTRONIC APPARATUS", which is incorporated herein by reference in its entirety.

### TECHNICAL FIELD

Some embodiments of this application relate to the field of energy storage technologies, and in particular, to a battery and an electronic apparatus.

### BACKGROUND

A battery is an apparatus that converts external energy into electric energy and stores the electric energy therein to supply power to an external device (for example, a portable electronic device) as needed. At present, batteries have been widely used in electronic devices such as mobile phones, tablets, and notebook computers.

Generally, the battery includes a cell, a circuit board, and a pole, where the pole and the circuit board are mounted on a same side of the cell. The cell is provided with an electrode assembly, the electrode assembly is connected to the pole, and the pole is connected to the circuit board, such that the circuit board can control the charging and discharging of the cell. However, the size of the pole limits the thickness of the cell, causing inconvenience.

### SUMMARY

To resolve the foregoing technical problem, some embodiments of this application provide a battery and an electronic apparatus.

The following technical solutions are adopted for some embodiments of this application to resolve the technical problem:

A battery is provided, including a cell. The cell includes a housing, an electrode assembly accommodated in the housing, a bonding member, and a pole. The housing includes a first surface in a thickness direction of the battery, and the housing is provided with a first avoidance opening running through the first surface along the thickness direction of the battery; and the pole is provided at the first avoidance opening, the pole is connected to the electrode assembly, and the bonding member is disposed between the housing and the pole. In this way, the pole may be at least partially disposed in the housing, and the pole may be connected to the outside via the first avoidance opening. This helps to reduce the impact of the size of the pole on the thickness of the cell and manufacture the thinner cell, thus increasing the energy density of the battery.

Optionally, the battery further includes a circuit board and a first conductive member, the housing includes a second surface adjacent to the first surface, the circuit board is disposed on the second surface, one end of the first conductive member is connected to the pole, and another end of the first conductive member is connected to the circuit board. In this way, as compared with the solution in which the circuit board is disposed on the first surface, the pole and the circuit board are respectively located on two surfaces of the housing, reducing the risk of impacting the thickness of the battery by the thickness of the circuit, thus helping to increase the energy density of the battery.

Optionally, the pole includes a connecting portion and a protruding edge portion protruding from the connecting portion, where the connecting portion is disposed at the first avoidance opening, the bonding member is disposed at one end of the protruding edge portion facing the first avoidance opening, and the bonding member bonds the protruding edge portion to an inner surface of the housing. Therefore, under the action of the protruding edge portion, the connecting portion is limited and cannot be directly separated from the housing, which helps to improve the reliability of connection between the pole and the housing.

Optionally, a gap is present between the connecting portion and a wall surface of the first avoidance opening, and the bonding member fills the gap, to seal the first avoidance opening. In this way, the bonding member can reduce the risk of short circuit between the connecting portion and the first avoidance opening, helping to improve the safety performance of the cell. In addition, the bonding member fills the gap between the wall surface of the first avoidance opening and the connecting portion, helping to improve the sealing performance of the cell.

Optionally, the thickness direction of the cell is a first direction, a direction perpendicular to the second surface is a second direction, a direction perpendicular to the first direction and the second direction is a third direction, and when viewed from the third direction, one end of the pole protrudes from the first surface. The battery further includes an insulating member, where the insulating member fits around the pole, the insulating member is disposed between the first surface and the first conductive member, and the insulating member is configured to insulate the housing from the first conductive member. In this way, when the housing is used as one of electrodes of the cell, the provision of the insulating member between the first conductive member and the housing can reduce the risk of short circuit between the first conductive member and the housing, improving the safety performance of the cell.

Optionally, the first conductive member is provided with a bulge, the bulge extending into the first avoidance opening to be connected to the pole, and the battery further includes an insulating member. The insulating member fits around the bulge, the insulating member is disposed between the first surface and the first conductive member, and the insulating member is configured to insulate the housing from the first conductive member. When the housing is used as one of electrodes of the cell, the provision of the insulating member between the first conductive member and the housing can reduce the risk of short circuit between the first conductive member and the housing, improving the safety performance of the cell.

Optionally, the electrode assembly includes a first electrode plate, where the first electrode plate includes a first current collector and a first protrusion protruding from an edge of the first current collector, and the first protrusion is connected to the pole.

Optionally, the electrode assembly further includes a second electrode plate, where the second electrode plate includes a second current collector and a second protrusion protruding from an edge of the second current collector. The battery further includes a conductive sheet and a second conductive member, where the conductive sheet is connected to the housing, the second protrusion is conductively connected to the housing, one end of the second conductive member is connected to the conductive sheet, and another end of the second conductive member is connected to the circuit board. In this way, when the housing is used as one of electrodes of the cell, compared with the direct connection between the second conductive member and the housing, the connection between the circuit board and the housing via the second conductive member and the conductive sheet reduces the risk of welding perforation of the housing when the second conductive member is welded to the housing, helping to improve the reliability of the battery.

Optionally, the electrode assembly includes multiple first electrode plates, multiple separators, and multiple second electrode plates, where the multiple first electrode plates, the multiple separators, and the multiple second electrode plates are stacked along a first direction, and the separator is disposed between the first electrode plate and the second electrode plate adjacent to each other.

Optionally, the housing includes a first housing plate, a middle frame, and a second housing plate. The first housing plate and the second housing plate are both connected to the middle frame, so as to form an accommodating cavity accommodating the electrode assembly.

Optionally, in the first direction, the cell has a size of t satisfying 1.5 mm≤t≤3 mm.

The following technical solutions are also adopted for some embodiments of this application to resolve the technical problem:
An electronic apparatus includes the foregoing battery.

Some embodiments of this application have beneficial effects as follows: The battery provided by some embodiments of this application includes a cell, where the cell includes a housing, an electrode assembly, a pole, and a bonding member, the electrode assembly being accommodated in the housing. The housing includes a first surface in a thickness direction of the battery, and the housing is provided with a first avoidance opening running through the first surface along the thickness direction of the battery. The pole is disposed at the first avoidance opening, the bonding member is disposed between the pole and the housing, and the bonding member is configured to bond the pole to the housing. In this way, the pole is at least partially disposed in the housing in the thickness direction of the battery, helping to reduce the impact of the size of the pole on the thickness of the cell and manufacture the thinner cell, thus increasing the energy density of the battery.

### BRIEF DESCRIPTION OF DRAWINGS

One or more embodiments are used as examples for description by using figures in corresponding accompanying drawings. These example descriptions impose no limitation on these embodiments. Elements with a same reference sign in the accompanying drawings represent similar elements. Unless otherwise stated, the figures in the accompanying drawings impose no limitation on a scale.
FIG. 1 is a schematic structural diagram of a battery according to an embodiment of this application;
FIG. 2 is a structural exploded view of FIG. 1;
FIG. 3 is a schematic cross-sectional view along line AA in FIG. 1;
FIG. 4 is a schematic diagram of an electrode assembly according to another embodiment of this application;
FIG. 5 is a schematic diagram of an electrode assembly being a stacked structure according to an embodiment of this application;
FIG. 6 is a schematic cross-sectional view along line BB in FIG. 1;
FIG. 7 is a schematic cross-sectional view along line BB in FIG. 1 in another case;
FIG. 8 is a schematic cross-sectional view along line CC in FIG. 1;
FIG. 9 is a schematic cross-sectional view along line CC in FIG. 1 in another case; and
FIG. 10 is a structural block diagram of an electronic apparatus according to another embodiment of this application.

Reference numerals in the accompanying drawings are described as follows: 100. battery; 200. cell; 300. circuit board; 400. first conductive member; 500. insulating member; 600. conductive sheet; 700. second conductive member; and 900. electronic apparatus;
210. housing; 220. electrode assembly; 230. pole; 240. bonding member; 211. first housing plate; 212. middle frame; and 213. second housing plate;
221. first electrode plate; 222. second electrode plate; 223. separator; 231. connecting portion; 232. protruding edge portion; 2211. first current collector; 2212. first protrusion; 2213. first active substance layer; 2214. first insulating medium; 2221. second current collector; 2222. second protrusion; 2223. second active substance; 2224. second insulating medium; 2101. first surface; 2102. second surface; 2103. first avoidance opening; and 410. bulge.

### DETAILED DESCRIPTION OF EMBODIMENTS

For ease of understanding of this application, the following describes this application in more detail with reference to the accompanying drawings and specific embodiments. It should be noted that when an element is "fixed to" another element, the element may be directly on the another element, or there may be one or more elements between the elements. When an element is "connected to" another element, the element may be directly connected to the another element, or there may be one or more elements between the elements. In the descriptions of this application, the orientations or positional relationships indicated by the terms "up", "down", "inside", "outside", "perpendicular", "horizontal", and the like are based on the orientations or positional relationships shown in the accompanying drawings. Such terms are intended merely for the ease and brevity of description of this application without indicating or implying that the apparatuses or components mentioned in this application must have specified orientations or must be constructed and operated in the specified orientations, and therefore shall not be construed as any limitations on this application. In addition, the terms "first" and "second" are merely intended for a purpose of description, and shall not be understood as an indication or implication of relative importance.

Unless otherwise defined, all technical and scientific terms used in this specification shall have the same meanings as those commonly understood by a person skilled in the art to which this application pertains. The terms used in this specification of this application are only used to describe specific embodiments, and are not intended to limit this application. The term "and/or" used in this specification includes any and all combinations of one or more relevant listed items.

In addition, technical features involved in different embodiments of this application that are described below may be combined as long as they do not conflict with each other.

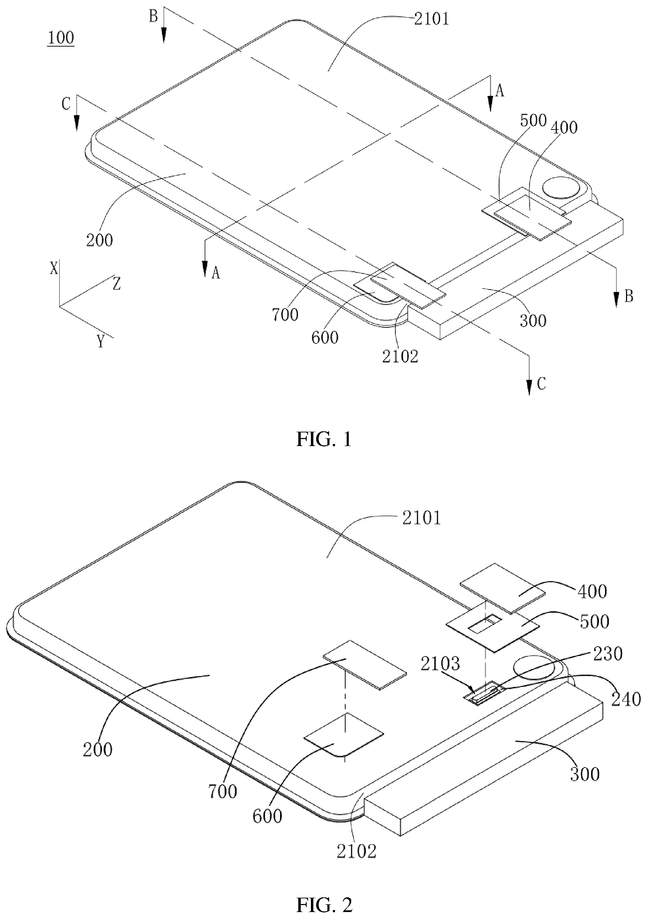

As shown in FIGs. 1 and 2, a battery 100 provided by an embodiment of this application includes a cell 200 and a circuit board 300, where the circuit board 300 is disposed at the cell 200.

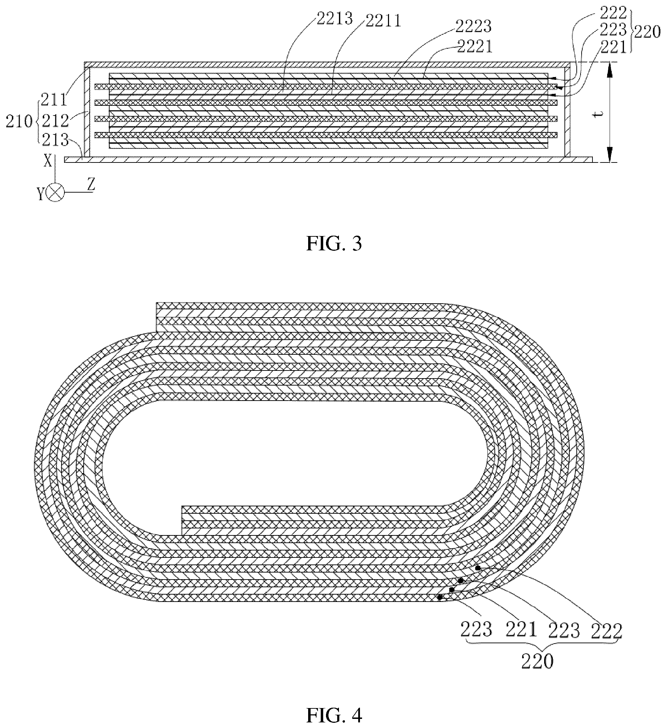

As shown in FIGs. 2 and 3, the cell 200 includes a housing 210, an electrode assembly 220, and a pole 230. The electrode assembly 220 is accommodated in the housing 210, the pole 230 is mounted in the housing 210, and the pole 230 is connected to the electrode assembly 220, the pole 230 being configured to be connected to the circuit board 300.

The housing 210 may be of multiple structures as long as it can accommodate the electrode assembly 220 and the pole 230. In a case, as shown in FIG. 3, the housing 210 includes a first housing plate 211, a middle frame 212, and a second housing plate 213 sequentially connected. The first housing plate 211, the middle frame 212, and the second housing plate 213 jointly enclose an accommodating space, and the electrode assembly 220 is accommodated in the accommodating space. In another case, the second housing plate 213 and the middle frame 212 form an integral member, which may be prepared through process such as die casting or punching, and the first housing plate 211 covers the foregoing integral member to form an accommodating space.

The electrode assembly 220 includes a first electrode plate 221, a second electrode plate 222, and a separator 223. The separator 223 is disposed between the first electrode plate 221 and the second electrode plate 222, and the separator 223 is configured to reduce the risk of short circuit between the first electrode plate 221 and the second electrode plate 222. The first electrode plate 221 and the second electrode plate 222 have different polarities. For example, if the first electrode plate 221 is a positive electrode plate, the second electrode plate 222 is a negative electrode plate; otherwise, if the first electrode plate 221 is a negative electrode plate, the second electrode plate 222 is a positive electrode plate.

It can be understood that the electrode assembly 220 may be of a wound structure or a stacked structure, which is specifically determined based on requirements. As shown in FIG. 3, the electrode assembly 220 is of a stacked structure. In this case, there are multiple first electrode plates 221, separators 223, and second electrode plates 222, and the multiple first electrode plates 221, separators 223, and second electrode plates 222 are stacked. The separator 223 is disposed between the first electrode plate 221 and the second electrode plate 222 adjacent to each other, multiple first electrode plates 221 having the same polarity are interconnected, and multiple second electrode plates 222 are interconnected. In addition, as shown in FIG. 4, the electrode assembly 220 is of a wound structure. In this case, the first electrode plate 221, the separator 223, and the second electrode plate 222 are stacked and wound. It should be understood that when the electrode assembly 220 is of a stacked structure, the thickness direction of the electrode assembly 220 and the thickness direction of the cell 200 may be the same or different. In this embodiment, the electrode assembly 220 is of a stacked structure, and the thickness direction of the electrode assembly 220 and the thickness direction of the cell 200 are the same, the thickness direction of the cell 200 being the thickness direction of the battery 100. The thickness direction of the cell 200 is defined as a first direction X, and in the first direction X, the cell 200 has a size of t satisfying 1.5 mm≤t≤3 mm.

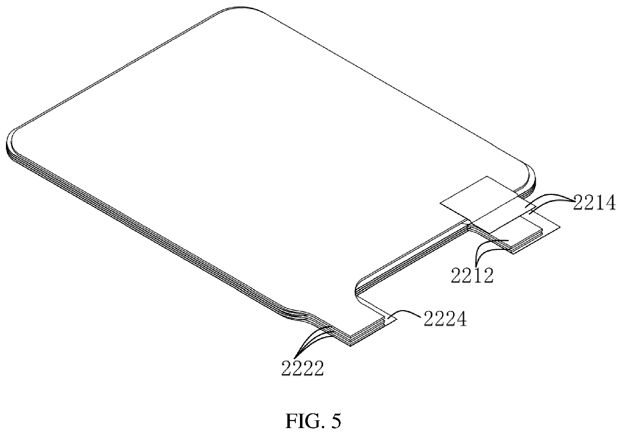

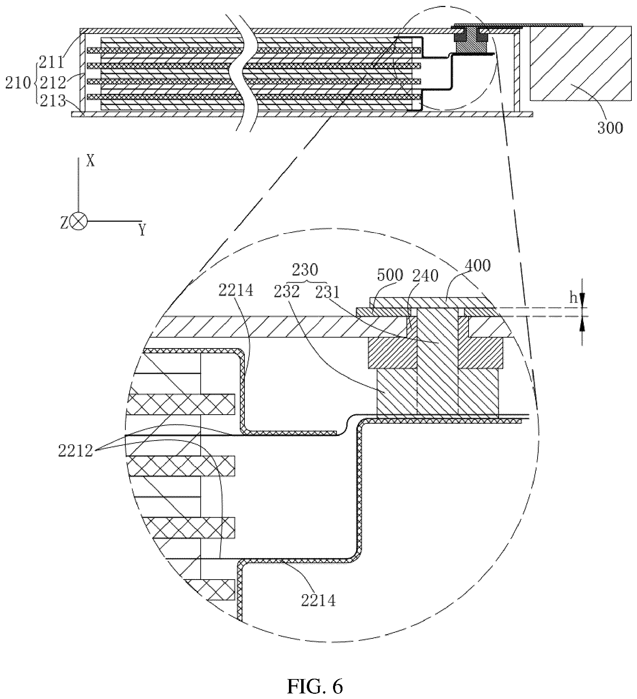

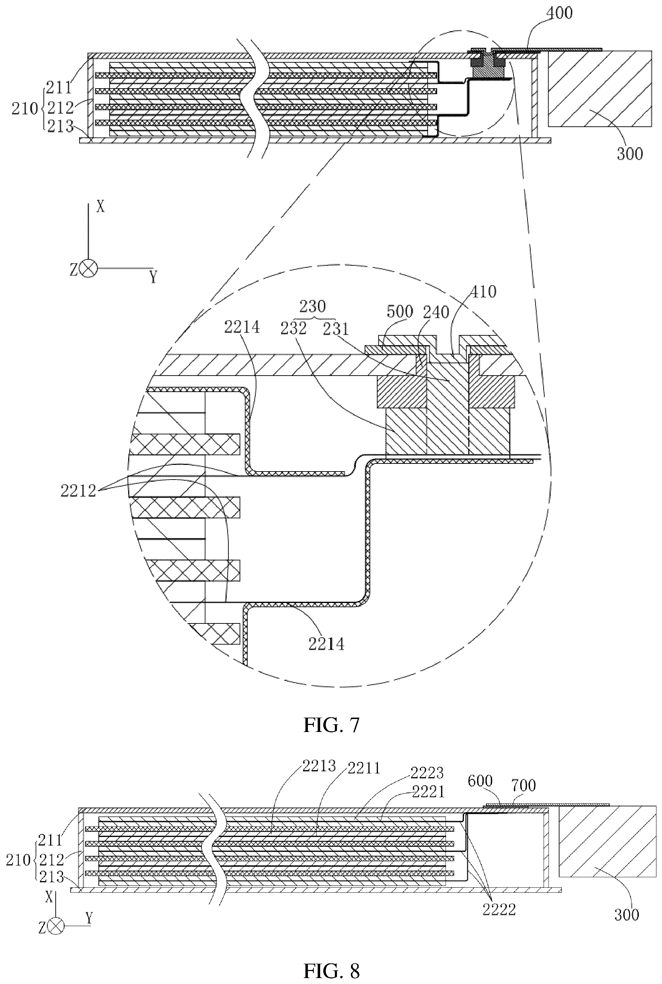

Referring to FIGs. 5 and 6, the first electrode plate 221 includes a first current collector 2211 and a first protrusion 2212 protruding from an edge of the first current collector 2211, where the surface of the first current collector 2211 is coated with a first active substance layer 2213. First protrusions 2212 of multiple first electrode plates 221 are interconnected. Similarly, referring to FIGs. 7 and 8, the second electrode plate 222 includes a second current collector 2221 and a second protrusion 2222 protruding from an edge of the second current collector 2221, where the surface of the second current collector 2221 is coated with a second active substance layer 2223. Second protrusions 2222 of multiple second electrode plates 222 are interconnected. In this embodiment, multiple first protrusions 2212 and multiple second protrusions 2222 are all located on the same side, so as to reduce the overall size of the electrode assembly 220 and increase the energy density of the cell 200.

A direction of the first protrusion 2212 protruding from the first current collector 2211 is defined as a second direction Y, the first direction X being perpendicular to the second direction Y, and a direction perpendicular to the first direction X and the second direction Y is a third direction Z.

It should be understood that in the first direction X, the surface on the outermost side of the first protrusion 2212 is provided with a first insulating medium 2214. The first insulating medium 2214 is configured to insulate the first protrusion 2212 from the housing 210, and the first insulating medium 2214 can further reduce the risk of the housing 210 being pierced by burrs on the surface of the first protrusion 2212, improving the safety performance of the cell 200. Similarly, in the first direction X, the surface on the outermost side of the second protrusion 2222 is provided with a second insulating medium 2224. The second insulating medium 2224 is configured to reduce the risk of the housing 210 being pierced by burrs on the surface of the second protrusion 2222, improving the safety performance of the cell 200. In this embodiment, the first insulating medium 2214 and the second insulating medium 2224 are both insulating adhesive paper. Certainly, the first insulating medium 2214 and the second insulating medium 2224 may alternatively be made of other materials, and are not limited to the insulating adhesive paper mentioned in this embodiment.

The quantity of the poles 230 may be set based on requirements, and one or more poles may be provided. In this embodiment, one pole 230 is provided, and the pole 230 may be connected to the first electrode plate 221 or the second electrode plate 222. In this case, the pole 230 is used as one of the electrodes of the cell 200. For ease of description, the solution of this application is described using an example in which the pole 230 is connected to the first electrode plate 221. The second electrode plate 222 is connected to the housing 210, and thus the housing 210 is used as another electrode of the cell 200.

In some embodiments, referring to FIGs. 2 and 6, the housing 210 includes a first surface 2101 and a second surface 2102 adjacent to the first surface 2101. The housing 210 is provided with a first avoidance opening 2103 running through the first surface 2101 along the first direction X, and the pole 230 is disposed at the first avoidance opening 2103.

The cell 200 further includes a bonding member 240, where the bonding member 240 is disposed between the housing 210 and the pole 230, and the bonding member 240 is configured to fixedly bond the pole 230 in the housing 210. In this embodiment, the pole 230 includes a connecting portion 231 and a protruding edge portion 232 protruding from the connecting portion 231. The connecting portion 231 is disposed at the first avoidance opening 2103, the bonding member 240 is disposed at one end of the protruding edge portion 232 facing the first avoidance opening 2103, and the bonding member 240 bonds the protruding edge portion 232 to an inner surface of the housing 210, helping to quickly mount the pole 230 on the housing 210. In this way, the pole 230 may be at least partially disposed in the housing 210, and the pole 230 may be connected to the outside via the first avoidance opening 2103. This helps to reduce the impact of the pole 230 on the thickness of the cell 200 and manufacture the thinner cell 200, thus increasing the energy density of the battery 100. It should be understood that the size of the outer periphery of the protruding edge portion 232 needs to be greater than the size of the first avoidance opening 2103, reducing the possibility that the protruding edge portion 232 freely drops out of the housing 210.

The bonding member 240 is a connecting member made of an adhesive insulating material, to reduce the risk of short circuit between the pole 230 and the housing 210 due to contact. In this embodiment, the bonding member 240 is made of a PP material with maleic anhydride functional groups. Certainly, the bonding member 240 may alternatively be another connecting member such as a double-sided tape.

Further, as shown in FIG. 6, a gap is present between the protruding edge portion 232 and a wall surface of the first avoidance opening 2103, and the bonding member 240 fills the gap to seal the first avoidance opening 2103. In other words, the connecting portion 231 is located in the first avoidance opening 2103, and the bonding member 240 is disposed between the pole 230 and the first avoidance opening 2103, which can reduce the risk of short circuit between the connecting portion 231 and the housing 210, thus improving the safety performance of the cell 200.

In some embodiments, the circuit board 300 is disposed on the second surface 2102 of the housing 210, and the battery 100 further includes a first conductive member 400. One end of the first conductive member 400 is connected to the pole 230, and another end of the first conductive member 400 is connected to the circuit board 300. In this way, the circuit board 300 and the pole 230 are respectively located on two surfaces of the housing 210. Without constraint from the size of the pole 230, the cell 200 may be designed thinner, helping to increase the energy density of the cell 200, thus widening the application range of the battery 100.

In some embodiments, the battery 100 further includes an insulating member 500. The insulating member 500 is disposed between the first surface 2101 and the first conductive member 400, and the insulating member 500 is configured to reduce the risk of short circuit between the first conductive member 400 and the first surface 2101 of the housing 210. In this embodiment, the housing 210 is made of conductive metal. It should be understood that in the first direction X, the insulating member 500 is hollowed out above the first avoidance opening 2103, to allow the insulating member 500 to impede less the connection between the first conductive member 400 and the pole 230.

It should be understood that when the pole 230 has different heights, the insulating member 500 may be mounted in different manners. In a case, as shown in FIG. 6, when viewed from the third direction Z, one end of the pole 230 protrudes from the first surface 2101. In addition, the insulating member 500 fits around the pole 230. In this case, the pole 230 protrudes from the first surface 2101 by a height of h satisfying h≤0.3 mm. In another case, as shown in FIG. 7, the pole 230 is located in the first avoidance opening 2103, that is, the pole 230 does not protrude from the first surface 2101. In this case, the first conductive member 400 is provided with a bulge 410, and the bulge 410 extends into the first avoidance opening 2103 to be connected to the pole 230. In this case, the insulating member 500 fits around the bulge 410.

In the foregoing two cases, when viewed from the second direction Y, in the third direction Z, the size of the insulating member 500 is larger than the size of the first conductive member 400, helping to reduce the risk of short circuit between the first conductive member 400 and the housing 210, thus improving the safety performance of the battery 100.

In some embodiments, referring to FIGs. 1 and 8, the battery 100 includes a conductive sheet 600 and a second conductive member 700. The conductive sheet 600 is mounted on the first surface 2101, one end of the second conductive member 700 is connected to the conductive sheet 600, and another end of the second conductive member 700 is connected to the circuit board 300. The second protrusion 2222 of the second electrode plate 222 is conductively connected to the housing 210. In this embodiment, the housing 210 is made of conductive metal, and the housing 210 is directly used as another electrode of the cell 200, so as to electrically connect the housing 210 to the circuit board 300 under the action of the conductive sheet 600 and the second conductive member 700.

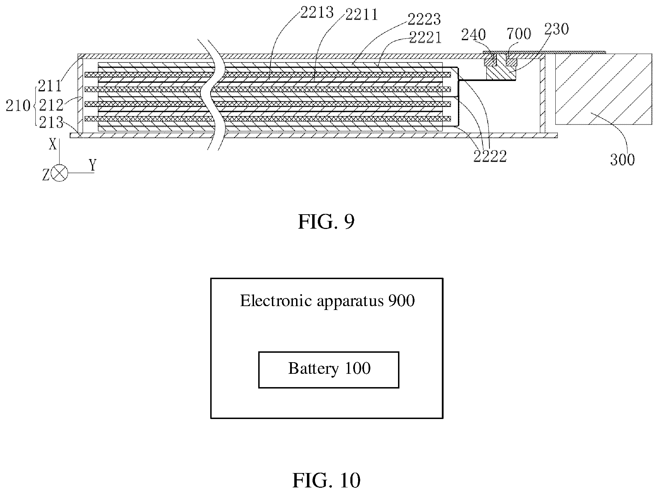

In some other embodiments, the housing 210 is made of an insulating material, for example, plastic. In addition, the housing 210 is provided with a second avoidance opening (not shown in the figure) running through the first surface 2101. As shown in FIG. 9, another pole 230 and another bonding member 240 are mounted at the second avoidance opening, and the another bonding member 240 bonds the another pole 230 to the second avoidance opening. A second protrusion 2222 of the second electrode plate 222 is connected to the another pole 230, one end of the second conductive member 700 is connected to the another pole 230, and another end of the second conductive member 700 is connected to the circuit board 300. In this embodiment, the conductive sheet 600 may be omitted. In this way, the another electrode of the cell 200 is also connected to the circuit board 300.

The battery 100 provided by some embodiments of this application includes a cell 200. The cell 200 includes a housing 210, an electrode assembly 220, a pole 230, and a bonding member 240, the electrode assembly 220 being accommodated in the housing 210. The housing 210 includes a first surface 2101 in a thickness direction of the battery 100, and the housing 210 is provided with a first avoidance opening 2103 running through the first surface 2101 along the first direction X. The pole 230 is disposed at the first avoidance opening 2103, the bonding member 240 is disposed between the pole 230 and the housing 210, and the bonding member 240 is configured to bond the pole 230 to the housing 210. In this way, the pole 230 may be at least partially disposed in the housing 210, and the pole 230 may be connected to the outside via the first avoidance opening 2103. This helps to reduce the impact of the size of the pole 230 on the thickness of the cell 200 and manufacture the thinner cell 200, thus increasing the energy density of the battery 100.

As shown in FIG. 10, an electronic apparatus 900 provided in another embodiment of this application includes the battery 100 of the foregoing embodiments. The electronic apparatus 900 in this application is not particularly limited, and the electronic apparatus may be any known electronic apparatus in the prior art. For example, the electronic apparatus 900 includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

The above description is only some embodiments of this application and does not limit the scope of this application. Any equivalent structures or equivalent process transformations made based on the description and drawings of this application, or their direct or indirect application in other related technical fields, are all included within the protection scope of this application.

## Claims

1. A battery, comprising a cell, wherein the cell comprises a housing and an electrode assembly accommodated in the housing, wherein
the housing comprises a first surface in a thickness direction of the battery, and the housing is provided with a first avoidance opening running through the first surface along the thickness direction of the battery; and
the cell further comprises a bonding member and a pole, wherein the pole is provided at the first avoidance opening, the pole is connected to the electrode assembly, and the bonding member is disposed between the housing and the pole.

2. The battery according to claim 1, wherein the battery further comprises a circuit board and a first conductive member, the housing comprises a second surface adjacent to the first surface, the circuit board is disposed on the second surface, one end of the first conductive member is connected to the pole, and another end of the first conductive member is connected to the circuit board.

3. The battery according to claim 2, wherein the pole comprises a connecting portion and a protruding edge portion protruding from the connecting portion, wherein the connecting portion is disposed at the first avoidance opening, the bonding member is disposed at one end of the protruding edge portion facing the first avoidance opening, and the bonding member bonds the protruding edge portion to an inner surface of the housing.

4. The battery according to claim 3, wherein a gap is present between the connecting portion and a wall surface of the first avoidance opening, and the bonding member fills the gap, to seal the first avoidance opening.

5. The battery according to claim 2, wherein the thickness direction of the cell is a first direction, a direction perpendicular to the second surface is a second direction, a direction perpendicular to the first direction and the second direction is a third direction, and when viewed from the third direction, one end of the pole protrudes from the first surface, and
the battery further comprises an insulating member, wherein the insulating member fits around the pole, the insulating member is disposed between the first surface and the first conductive member, and the insulating member is configured to insulate the housing from the first conductive member.

6. The battery according to claim 2, wherein the first conductive member is provided with a bulge, the bulge extending into the first avoidance opening to be connected to the pole, and
the battery further comprises an insulating member, wherein the insulating member fits around the bulge, the insulating member is disposed between the first surface and the first conductive member, and the insulating member is configured to insulate the housing from the first conductive member.

7. The battery according to claim 1, wherein the electrode assembly comprises a first electrode plate, wherein the first electrode plate comprises a first current collector and a first protrusion protruding from an edge of the first current collector, and the first protrusion is connected to the pole.

8. The battery according to claim 2, wherein the electrode assembly further comprises a second electrode plate, wherein the second electrode plate comprises a second current collector and a second protrusion protruding from an edge of the second current collector, and
the battery further comprises a conductive sheet and a second conductive member, wherein the conductive sheet is connected to the housing, the second protrusion is conductively connected to the housing, one end of the second conductive member is connected to the conductive sheet, and another end of the second conductive member is connected to the circuit board.

9. The battery according to claim 1, wherein the electrode assembly comprises multiple first electrode plates, multiple separators, and multiple second electrode plates, wherein the multiple first electrode plates, the multiple separators, and the multiple second electrode plates are stacked along a first direction, and the separator is disposed between the first electrode plate and the second electrode plate adjacent to each other, the first direction being the thickness direction of the cell.

10. The battery according to any one of claims 1 to 9, wherein the housing comprises a first housing plate, a middle frame, and a second housing plate, wherein the first housing plate and the second housing plate are both connected to the middle frame, so as to form an accommodating cavity accommodating the electrode assembly.

11. The battery according to claim 1, wherein the thickness direction of the cell is a first direction, and in the first direction, the cell has a size of t satisfying 1.5 mm≤t≤3 mm.

12. An electronic apparatus, comprising the battery according to any one of claims 1 to 11.
